# EUROPÄISCHE PATENTANMELDUNG

(11) **EP 4 265 100 A1**
(43) Veröffentlichungstag der Anmeldung: **25.10.2023**
(21) Anmeldenummer: 23169013.2
(22) Anmeldetag: 20.04.2023
(51) Int. Cl.: A01D 89/00

(54) **ERNTEGUTAUFNEHMER UND ABSTREIFERANORDNUNG**

(30) Priorität: 21.04.2022 DE 102022109701
(71) Anmelder: Reiter, Thomas, 4707 Schluesslberg (AT)
(72) Erfinder: Reiter, Thomas, 4707 Schluesslberg (AT)
(74) Vertreter: Puschmann Borchert Kaiser Klettner Patentanwälte Partnerschaft mbB

(57) **Zusammenfassung**

Die Erfindung betrifft einen Erntegutaufnehmer (10) umfassend eine, sich wenigstens teilweise über seine Arbeitsbreite erstreckende Welle (20), wobei entlang der Welle (20) Zinkenelemente (28, 38) angeordnet sind, wobei zwischen benachbarten Zinkenelementen (28, 38) Abstreiferanordnungen (42, 44) angeordnet sind, wobei die Welle (20) und die Abstreiferanordnungen (42, 44) von einer Querverbindungstruktur (72) getragen werden, wobei die Querverbindungsstruktur (72, 172) wenigstens zwei im Winkel gegeneinander verneigbare Jochelemente (70a, 70b, 170a, 170b) umfasst, die sich im Wesentlichen parallel zur Welle (20) erstrecken, wobei wenigstens eine Abstreiferanordnung (42, 44) in Querrichtung zu den benachbarten Zinkenelementen (28, 38) jeweils eine zugeordnete Abstreiferkante (74, 76, 174, 176) aufweist, die jeweils eine Kantenebene (EK1, EK2) bildet. Die Erfindung zeichnet sich dadurch aus, dass wenigstens eine Abstreiferanordnung als Ausgleichsabstreiferanordnung (44) ausgebildet ist und derart gestaltet ist, dass sich bei einer Winkeländerung der benachbarten Jochelemente (70a, 70b, 170a, 170b) zueinander eine Winkeländerung der beiden Kantenebenen (EK1, EK2) der Ausgleichsabstreiferanordnung (44) zueinander ergibt.

## Beschreibung

Die Erfindung betrifft einen Erntegutaufnehmer umfassend eine Abstreiferanordnung gemäß dem Oberbegriff des Anspruchs 1 sowie eine Abstreiferanordnung gemäß dem Oberbegriff des Anspruchs 7.

Die DD 143 496 offenbart einen, auch als Pickup bezeichneten, Erntegutaufnehmer. Die Zinkenelemente des Erntegutaufnehmers sind an einer Welle angeordnet. Zwischen zwei benachbarten Zinkenelementen sind Abstreiferanordnungen angeordnet, die in Querrichtung beidseitig Abstreifkanten aufweisen. Der dort offenbarte Erntegutaufnehmer kann sich der Bodenkontur anpassen. Jedoch ist die Gefahr, dass Erntegut von den Rechzinken bei kupiertem Gelände eingezogen wird, gegenüber starren Systemen vergrößert.

Es ist Aufgabe der Erfindung, die Abstreiferanordnung und den Erntegutaufnehmer so zu verbessern, dass die Gefahr des Einziehens von Erntegut reduziert wird.

Die Aufgabe wird durch die Merkmale des Oberbegriffs des Anspruchs 1 in Verbindung mit seinen kennzeichnenden Merkmalen gelöst.

Die Unteransprüche bilden vorteilhafte Weiterbildungen der Erfindung.

Ein Erntegutaufnehmer umfasst in bekannter Weise eine, sich wenigstens teilweise über seine Arbeitsbreite quer zur Fahrtrichtung erstreckende Querverbindungsstruktur, die eine Welle trägt, wobei entlang der Welle Zinkenelemente angeordnet sind. Die Querverbindungsstruktur und die Welle sind derart ausgebildet, dass benachbarte Bereiche der Welle und benachbarte Bereiche der Querverbindungsstruktur abhängig von der Bodenkontur jeweils unterschiedliche Winkellagen zueinander einnehmen können.

Die Zinkenelemente sind an der Welle befestigt und weisen Rechzinken auf, die in einer Zinkenreihe umlaufend angeordnet sind. Die Rechzinken einer Zinkenreihe liegen im Wesentlichen in einer Zinkenebene, die normal zur Welle liegt. Die Zinkenreihen benachbarter Zinkenelemente sind in Querrichtung in einem Zinkenabstand zueinander angeordnet. Unter Zinkenabstand wird die lichte Weite zwischen in Querrichtung benachbarter Rechzinken verstanden.

Zwischen zwei benachbarten Zinkenreihen benachbarter Zinkenelemente sind in bekannter Weise Abstreiferanordnungen angeordnet. Sowohl die Welle als auch die Abstreiferanordnungen werden von der Querverbindungsstruktur getragen, die sich im Wesentlichen parallel zur Welle erstreckt. Der Erntegutaufnehmer wird mittels über die Arbeitsbreite verteilter Aufstandsmittel, die mit der Querverbindungsstruktur verbunden sind, über den Boden geführt, so dass sich die Kontur der Querverbindungsstruktur in Abhängigkeit der Bodenkontur anpassen kann. Die Querverbindungsstruktur umfasst wenigstens zwei Jochelemente, die derart miteinander verbunden sind, dass sich abhängig von der Bodenkontur ein Winkelversatz zwischen zwei benachbarten Jochelementen ergibt.

Bevorzugt können die Abstreiferanordnungen unmittelbar an den Jochelementen befestigt sein. Insbesondere kann eine Lagerung der Welle auch an den Jochelementen erfolgen. Dies hat zur Folge, dass sich die benachbarten Bereiche der Welle auch mit der Neigung der Jochelemente neigen.

Die Abstreiferanordnungen weisen in Querrichtung zu den benachbarten Zinkenelementen jeweils zugeordnete Abstreiferkanten auf, die jeweils eine Kantenebene bilden, die orthogonal zur Achse der Jochelemente liegen, insbesondere auch orthogonal zur Wellenachse. Die Abstreiferkanten erstrecken sich, in Querrichtung beidseitig der Abstreiferanordnung liegend, entlang der Krümmung der Abstreiferanodnung. Die Abstreiferkanten können materialeinheitlich mit dem eine Abstreiferoberfläche bildenden Teil der Abstreiferanordnung ausgebildet sein.

Erfindungsgemäß ist die wenigstens eine Abstreiferanordnung als Ausgleichabstreiferanordnung derart weitergebildet, dass sich bei einer Winkeländerung der benachbarten Jochelemente zueinander auch eine Winkeländerung der beiden Kantenebenen der Ausgleichsabstreiferanordnung ergibt.

Dadurch kann die Ausgleichsabstreiferanordnung so ausgestaltet sein, dass insbesondere die Kantenebenen weitgehend parallel zu der Kantenebene des benachbarten Abstreifers gehalten werden, wodurch auch die zugeordneten Rechzinken entlang dieser Kantenebene geführt werden können. So wird, unabhängig davon, ob die Wellenbereiche mit dem gleichen Winkelversatz wie die Jochelemente oder leicht unterschiedlich dazu zueinander geneigt sind, das Spaltmaß zwischen Abstreifer und Zinken auch bei kupiertem Gelände annähernd konstant gehalten und die Gefahr, dass Erntegut eingezogen wird oder Zinken eingeklemmt werden, wird reduziert.

Eine große Winkelabweichung der Wellenachsenbereiche kann zudem bei Erntegutaufnehmern nach dem Stand der Technik, wie der DD 143 496, zu einer Verengung des Spaltmaßes führen, das sich zwischen zwei zugewandten Abstreiferkanten benachbarter Abstreiferanordnungen ergibt. Die Verringerung kann sich bis auf ein Maß ergeben, das kleiner als der Durchmesser des Rechzinkens ist. Dies kann zu einem Verklemmen der Zinken mit den Abstreifern und einem erhöhten Verschleiß der Abstreifer oder zu einem Abbrechen der Rechzinken führen.

Bei dem erfindungsgemäßen Erntegutaufnehmer muss dies nicht mehr durch eine ausreichend große Tolerierung des Spaltmaßes berücksichtigt werden, vielmehr kann das Spaltmaß eng toleriert werden, bevorzugt so eng, dass das Spaltmaß dem Durchmesser des Rechzinkens entspricht.

Dadurch kann nicht nur eine Verbesserung des Einziehverhaltens bei einem Winkelversatz, sondern auch das Einziehverhalten in der gestreckten Lage bei ebenem Boden verbessert werden.

Die Zinkenelemente können insbesondere jeweils zwei Zinkenreihen aufweisen, wie dies bei gängigen Doppelzinken der Fall ist, bei welchen ein Doppelzinken zwei verbundene Rechzinken besitzt.

Bevorzugt entspricht der Zinkenabstand zwischen den benachbarten Zinkenreihen benachbarter Zinkenelemente dem Zinkenabstand zwischen den beiden Zinkenreihen eines Zinkenelements.

Dies sorgt für ein gleichmäßiges Rechverhalten. Auch zwischen den beiden Zinkenreihen eines Zinkenelements sind üblicher Weise Abstreiferanordnungen vorgesehen. Diese können identisch zu den Abstreiferanordnungen zwischen den Zinkenelementen mit den Doppelzinken ausgebildet sein.

Wenigstens eine Abstreiferanordnung, nämlich eine Ausgleichsabstreiferanordnung, ist bevorzugt in einem Bereich der Querverbindungstruktur bzw. einem Bereich der Welle angeordnet, in dem, beispielsweise bei einer Wannenlage, die größten Winkelabweichungen zwischen benachbarten Jochelementen bzw. zwischen benachbarten Wellenbereichen auftreten.

Gemäß einer bevorzugten Ausgestaltung umfasst die Ausgleichsabstreiferanordnung zwei Abstreifersegmente, die jeweils eine Abstreiferkante und eine Abstreiferoberfläche besitzen.

Die Breite der Abstreifersegmente ist ausgehend von der Mitte des Abstreifersegments sowohl über einen Bereich, der vor dem oberen Anbindungspunkt liegt, als auch über einen Bereich, der vor dem unteren Anbindungspunkt liegt, geringer als die Hälfte des Zinkenabstands.

Die Rechzinken treten am unteren Ende über die Abstreiffläche der Abstreiferanordnung hinaus und tauchen am oberen Ende wieder unter die Abstreiferoberfläche der Abstreiferanordnung ein.

Da die Summe der Breite der beiden Abstreifersegmente geringer als der Zinkenabstand ist, ergibt sich wenigstens im oberen und im unteren Bereich ein Spalt zwischen den beiden Abstreifersegmenten. Aufgrund dieses Spalts ist eine Anpassung der Winkellage der Kantenebenen zueinander möglich.

Die Spaltbreite bzw. die Summe der Breite der Abstreifersegmente ist so gewählt, dass der sich dadurch ergebende Winkelausgleich im erforderlichen Maß erfolgen kann.

Der Erfindung liegt die Erkenntnis zu Grunde, dass ein Spalt zwischen den Abstreifersegmenten zwar schlechtere Gleiteigenschaften als eine geschlossene Fläche besitzt. Aber der sich so ergebende, auch bei gestreckter Lage des Erntegutaufnehmers vorhandene Spalt hat dennoch eine erheblich geringere negative Auswirkung auf das Einziehverhalten von Erntegut als eine Vergrößerung des Spaltmaßes zwischen Rechzinken und Abstreifer.

Gemäß einer bevorzugten Weiterbildung der Erfindung weisen die Abstreifersegmente wenigstens einen oberseitigen Anbindungspunkt und wenigstens einen unterseitigen Anbindungspunkt zur Anbindung an die Querverbindungsstruktur, insbesondere zur Anbindung an die Jochelemente, auf. Die Ausgleichsabstreiferanordnung weist zudem eine Stützstruktur auf, die das Abstreifersegment in Querrichtung stabilisiert. Die Stabilisierung erfolgt entgegenwirkend zu der Zinkenquerkraft, die von der an der Abstreifkante anliegenden Zinkenreihe erzeugt wird.

Dadurch kann die von den rotierenden Rechzinken ausgeübte Zinkenquerkraft, insbesondere in dem Bereich des Abstreifersegments, in dem es den größten Abstand zum Joch besitzt, aufgenommen werden, so dass der Zinkendruck nicht zu einer signifikanten Erhöhung des Spaltmaßes zwischen Zinken und Abstreifersegment führt. Auch kann eine Schwingung der Abstreifersegmente weitgehend vermieden werden, wodurch die Dauerfestigkeit der Ausgleichsabstreiferanordnung erhöht wird.

Die Stützstruktur kann durch ein Stützprofil, das einerseits mit dem Jochelement und andererseits mit dem Abstreifersegment verbunden ist, umgesetzt werden. Über dieses zu den ober- und unterseitigen Anbindungspunkten zusätzliche Anbindungsprofil kann der Abstreifer in Querrichtung stabilisiert werden.

So kann ein Winkelausgleich zwischen zwei relativ zueinander beweglichen Jochelementen erreicht werden.

Gemäß einer weiteren bevorzugten Weiterbildung kann das Abstreifersegment, insbesondere einteilig, aus einem Kunststoff hergestellt sein. Das Stützprofil kann insbesondere aus Metall sein. Bevorzugt kann das Metallprofil in Querrichtung formschlüssig mit dem Abstreifersegment verbunden sein.

In einer weiteren Ausbildung kann die Stützstruktur als Verbindungsstruktur ausgebildet sein, die die beiden Abstreifersegmente etwa in der Mitte der Abstreiferlänge in Querrichtung druckkraftübertragend miteinander verbindet, wobei jedes Abstreifersegment an seiner Oberseite und seiner Unterseite mit einem Jochelement verbunden ist.

Durch die Verbindungsstruktur ergibt sich eine Stützwirkung dahingehend, dass durch die Verbindungsstruktur das jeweils eine Abstreifersegment das andere Abstreifersegment in Querrichtung abstützt.

In einer besonders bevorzugten Ausgestaltung können die Abstreifersegmente und die Verbindungsstruktur einstückig ausgebildet sein. Dies hat eine einfache Herstellung der Ausgleichsabstreiferanordnung zur Folge.

Gemäß einer besonders vorteilhaften Ausführungsform kann der Erntegutaufnehmer Abstreiferanordnungen, die in Form von herkömmlichen vollflächigen Abstreifern ausgebildet sind, aufweisen und zudem wenigstens eine Ausgleichsabstreiferanordnung, bevorzugt auch mehrere Ausgleichsabstreiferanordnungen, umfassen.

Die Querverbindungsstruktur und die Welle spannen eine Verformungsebene auf. Die Verbindungsstruktur der Ausgleichsabstreiferanordnung erstreckt sich über den Bereich, in dem diese Verformungsebene die Ausgleichsabstreiferanordnung an ihrer Abstreiferoberfläche in einer Schnittlinie schneidet. Die Verbindungsstruktur erstreckt sich ausgehend von dieser Schnittlinie insbesondere über einen Bereich von +/- 30 mm entlang der Abstreiferkante.

Die Breite der Ausgleichsabstreiferanordnung zwischen den Abstreifkanten entspricht im Wesentlichen der Breite der herkömmlichen vollflächigen Abstreifer, also in etwa dem Zinkenabstand.

Das Spaltmaß zwischen den zugewandten Abstreiferkanten zweier benachbarter Abstreiferanordnungen entspricht etwa dem Drahtdurchmesser der Rechzinken.

Insbesondere ermöglicht die Ausgleichsabstreiferanordnung neben dem Winkelversatz der beiden Abstreifersegmente auch den Ausgleich eines geringen vertikalen Versatzes.

Gemäß einem weiteren Aspekt der Erfindung betrifft diese eine Ausgleichsabstreiferanordnung zur Befestigung an einem Erntegutaufnehmer mit einer Querverbindungsstruktur und mit an einer Welle angeordneten Zinkenelementen. In bekannter Weise weist die Ausgleichsabstreiferanordnung in Richtung ihrer beiden Enden jeweils einen Anbindungsbereich auf, um die Ausgleichsabstreiferanordnung mit der Querverbindungsstruktur, insbesondere an einem Jochelement, zu verbinden.

Erfindungsgemäß weist die Ausgleichsabstreiferanordnung zwei Abstreifersegmente auf, die an jedem Ende in Querrichtung beabstandet sind, und so vier Schenkel bilden, wobei jeder Schenkel einen Anbindungspunkt zur Verbindung mit der Querverbindungsstruktur, insbesondere mit dem Jochelement, aufweist.

Bevorzugt ist zwischen den Enden der Abstreifersegmente eine Verbindungsstruktur vorgesehen, die die Abstreifersegmente miteinander verbindet. Die Verbindungsstruktur kann insbesondere in der Art eines Festkörpergelenks ausgebildet sein.

Die Abstreifersegmente und die Verbindungsstruktur sind bevorzugt einstückig, insbesondere aus einem Kunststoff, ausgeführt.

Die Länge LV der Verbindungsstruktur entlang der Abstreiferkante ist bevorzugt größer als 1/5 und kleiner als die Hälfte der Abstreiferlänge LA zwischen den Anbindungspunkten entlang der Abstreiferkante.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine ausschnittsweise perspektivische Ansicht eines erfindungsgemäßen Erntegutaufnehmers;
- Fig. 2: eine Schnittansicht eines erfindungsgemäßen Erntegutaufnehmers;
- Fig. 3: eine ausschnittsweise Frontalansicht eines erfindungsgemäßen Erntegutaufnehmers im Bereich eines Ausgleichsabstreifers bei ebener Aufstandsfläche;
- Fig. 4: eine ausschnittsweise Frontalansicht eines erfindungsgemäßen Erntegutaufnehmers im Bereich eines Ausgleichsabstreifers in Wannenlage;
- Fig. 5: eine ausschnittsweise Rückansicht auf eine erste Ausführungsform der erfindungsgemäßen Ausgleichsabstreiferanordnung;
- Fig. 6: eine ausschnittsweise Rückansicht auf eine zweite Ausführungsform der erfindungsgemäßen Ausgleichsabstreiferanordnung;
- Fig. 7: eine perspektivische Ansicht auf eine erfindungsgemäße Ausgleichsabstreiferanordnung, und
- Fig. 8: einen Erntegutaufnehmer mit drei Jochelementen in Wannenlage.

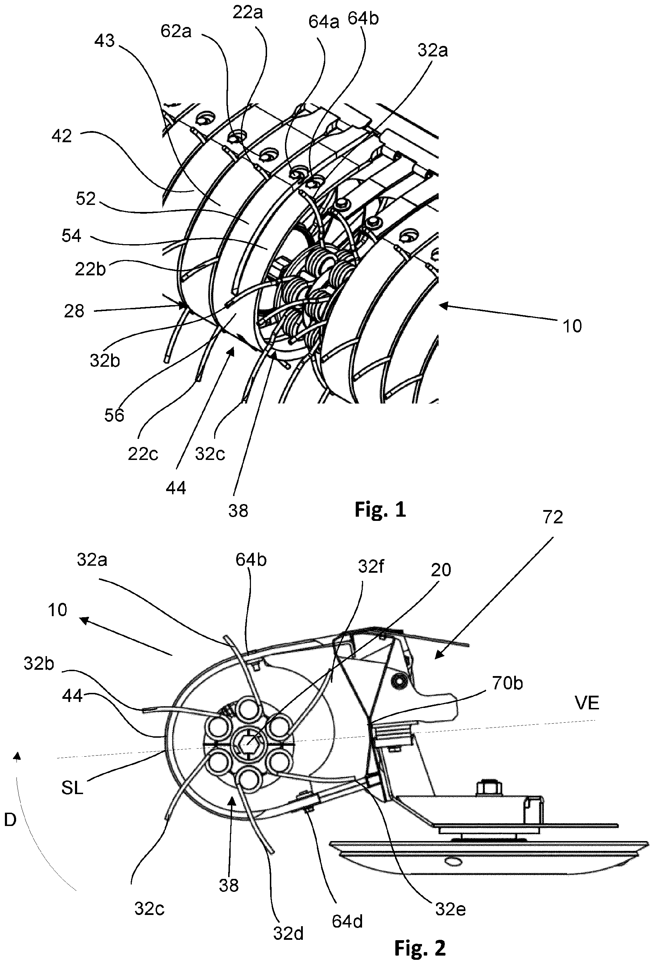

Fig. 1 zeigt eine perspektivische Ansicht eines erfindungsgemäßen Erntegutaufnehmers 10. Der Erntegutaufnehmer weist eine Vielzahl von Abstreiferanordnungen 42, 44 auf, die zwischen Zinkenelementen angeordnet sind. Eine dieser Abstreiferanordnungen ist eine Ausgleichsabstreiferanordnung 44.

Die Abstreiferanordnungen 42 und die Ausgleichsabstreiferanordnung 44 liegen zwischen Zinkenelementen, wobei die Abstreiferanordnungen 43, 45 zwischen den Zinkenreihen eines Zinkenelements 28, 38 liegen. Die Abstreiferanordnung 45 ist in der Fig.1 ausgeblendet, um das Zinkenelement 38 sichtbar zu machen, wobei das benachbarte Zinkenelement 28, das die Zinkenreihe mit den Rechzinken 22a, 22b, 22c, 22d, 22e, 22f aufweist, von der Abstreiferanordnung 43 verdeckt ist.

Die Ausgleichsabstreiferanordnung 44 liegt zwischen der Zinkenreihe eines ersten Zinkenelements 28, die unter anderem von den Rechzinken 22a, 22b, 22c gebildet wird und der nächstliegenden Zinkenreihe des benachbarten zweiten Zinkenelements 38, die unter anderem durch die Rechzinken 32a, 32b, 32c gebildet wird.

Die Abstreiferanordnungen 42, 43, 44, 45 weisen an ihrer Oberseite, also auf der Seite der Abstreiferanordnungen, wo die Rechzinken unter die Abstreifer abtauchen, Anbindungspunkte zur Verbindung der Abstreiferanordnung mit einer Querverbindungsstruktur 72, insbesondere einem Jochelement 70a, 70b der Querverbindungsstruktur 72, auf. Entsprechende Anbindungspunkte sind auch an der Unterseite der Abstreiferanordnungen vorgesehen. Die Unterseite ist die Seite, an der die Rechzinken aus der Abstreiferanordnung auftauchen. Die Abstreiferanordnungen, ausgenommen die Ausgleichsabstreiferanordnung 44, sind in Form von einfachen Abstreifern in Form von einstückigen, vollflächigen Kunststoffbögen gebildet, die sowohl an ihrem oberseitigen Anbindungsbereich als auch an ihrem unterseitigen Anbindungsbereich Löcher aufweisen, durch die hindurch die Abstreifer mit entsprechenden Aufnahmen an den Jochelementen 70a, 70b verschraubt werden.

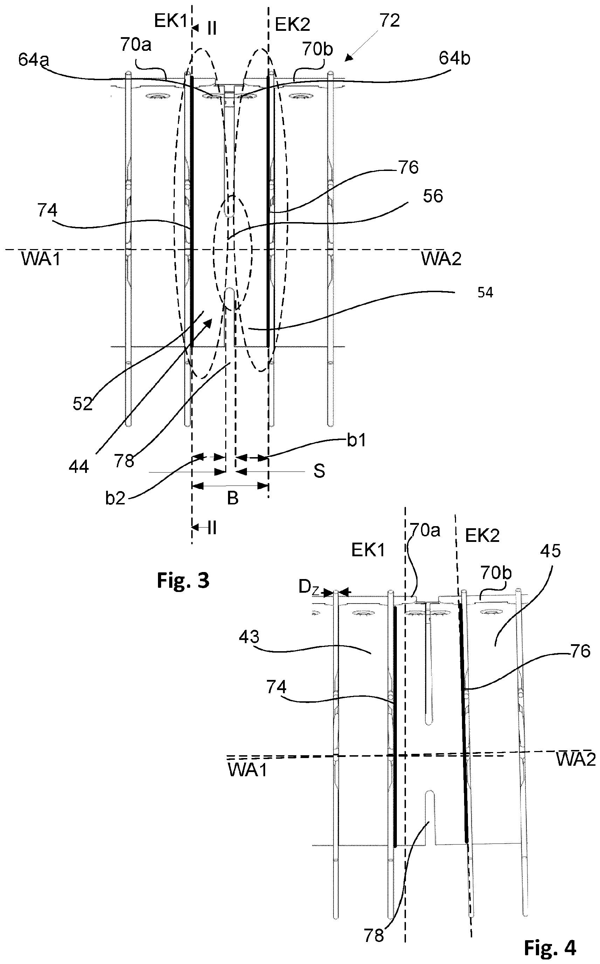

Die Querverbindungsstruktur 72 weist ein erstes Jochelement 70a und ein zweites Jochelement 70b auf, die zueinander verneigbar sind. Die beiden Jochelemente 70a, 70b sind unter anderem über eine Ausgleichsabstreiferanordnung 44 verbunden, die insbesondere in den Fig. 3 und Fig. 4 näher beschrieben ist. Die Ausgleichsabstreiferanordnung 44 weist ein erstes Abstreifersegment 52 auf, dessen oberseitiger Anbindungspunkt 64a mit dem ersten Jochelement 70a verbunden ist. Ferner umfasst die Ausgleichsabstreiferanordnung 44 ein zweites Abstreifersegment 54, dessen oberseitiger Anbindungsbereich 64b mit dem zweiten Jochelement 70b der Querverbindungsstruktur 72 verbunden ist.

Fig. 2 zeigt die Schnittansicht II-II. Die Ausgleichsabstreiferanordnung 44 ist in der Seitenansicht zu erkennen. Die Ausgleichsabstreiferanordnung 44 erstreckt sich um die Welle 20, an der ein Zinkenelement 38 angeordnet ist, herum. Das Zinkenelement 38 trägt sechs Doppelzinken mit den Rechzinken 32a, 32b, 32c, 32d, 32e, 32f, die eine Zinkenreihe bilden und das Erntegut in der Drehrichtung D von unten nach oben fördern.

Am unterseitigen Anbindungspunkt 64d ist die Ausgleichsabstreiferanordnung 44 am zweiten Jochelement 70b angebunden. Die Welle 20 und die Querverbindungsstruktur 72 spannen eine Verformungsebene VE auf, zu der die Verformung der Querverbindungsstruktur 72 und der Welle im Wesentlichen orthogonal erfolgt. Die Verformungsebene VE schneidet die Ausgleichsabstreiferanordnung 44 in einer Schnittlinie SL.

Fig. 3 zeigt einen Ausschnitt des erfindungsgemäßen Erntegutaufnehmers 10 in einer Frontalansicht bei ebenem Untergrund. Die Ausgleichsabstreiferanordnung 44 weist ein erstes Abstreifersegment 52 auf, das mit seiner ersten Abstreiferkante 74 in Anlage mit den Rechzinken 22a, 22b, 22c der ersten Zinkenreihe gelangt. Ferner weist die Ausgleichsabstreiferanordnung 44 ein zweites Abstreifersegment 54 auf, das eine Abstreiferkante 76 besitzt, die der zweiten Zinkenreihe mit den Rechzinken 32a, 32b, 32c, 32d, 32e, 32f zugewandt ist. Die Abstreiferkanten 74, 76 sind zur besseren Kenntlichmachung fett liniert dargestellt, wobei aber keine separate Kantenbildung vorliegt.

Die Summe der Abstreifersegmentbreiten b1, b2 ist geringer als der Zinkenabstand B zwischen den Zinkenreihen der benachbarten Zinkenelemente 28, 38 zwischen denen die Ausgleichsabstreiferanordnung 44 angeordnet ist.

Der Abstand der Abstreiferkanten 74, 76 voneinander entspricht jedoch dem Zinkenabstand B. Dies führt dazu, dass sich zwischen den Abstreifersegmenten ein Spalt 78 ergibt, dessen Breite S bei ebener Aufstandsfläche der Differenz der Summe der Abstreifersegmentbreiten b1, b2, zum Zinkenabstand entspricht.

Der Spalt 78 ist in der vorliegenden Ausführung über die gesamte Kantenlänge gleichmäßig ausgebildet, jedoch durch die Verbindungsstruktur 56 unterbrochen.

Die Verbindungsstruktur 56 liegt auf der vertikalen Höhe der Welle 20, wobei in der ebenen Lage die Achsen WA1, WA2 der beiden Jochelemente 70a, 70b im Bereich der Ausgleichsabstreiferanordnung 44 fluchtend zueinander liegen.

Die Verbindungsstruktur 56 ist zusammen mit den Abstreifersegmenten 52, 54 einstückig ausgebildet und verbindet die Abstreifersegmente 52, 54 in Querrichtung derart steif bzw. druckfest, dass sich die Abstreifersegmente 52, 54 gegenseitig in Querrichtung stützen und den von den Zinken aufgebrachten Querkräften widerstehen können, wobei eine Neigung der Kantenebenen EK1, EK2 zueinander dennoch gewährleistet ist, wie dies in Fig. 4 dargestellt ist.

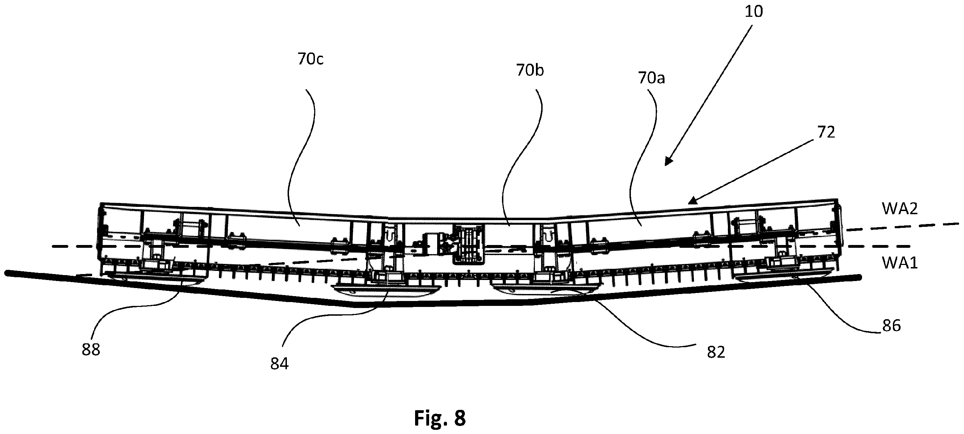

Fig. 4 zeigt eine Frontalansicht, wie Fig. 3 in einer Arbeitslage, in der das zweite Jochelement 70b gegenüber dem ersten Jochelement 70a geneigt ist, wie dies vorkommen kann, wenn der Erntegutaufnehmer 10 in eine Wannenlage fährt, wie dies in Fig. 8 dargestellt ist. Dies hat nun auch zur Folge, dass die Achse WA1 des Jochelements 70a und die Achse WA2 des Jochelements 70b in diesem Bereich sich zueinander neigen. Die normal zur Wellenachse liegenden Zinkenebenen neigen sich ebenfalls.

Der erfindungsgemäße Erntegutaufnehmer weist in diesem Bereich die Ausgleichsabstreiferanordnung 44 auf, bei der sich die Kantenebenen EK1, EK2 nahezu parallel zu den benachbarten Abstreiferanordnungen neigen. Dies hat zur Folge, dass das Spaltmaß zwischen der ersten Abstreiferkante 74 und der benachbarten Abstreiferkante des benachbarten Abstreifers 43 und das Spaltmaß zwischen der zweiten Abstreiferkante 76 und der benachbarten Abstreiferkante des benachbarten Abstreifers 45 über einen großen Neigungswinkelbereich der beiden Jochelemente 70a, 70b annähernd konstant bleiben. Bevorzugt entspricht das Spaltmaß dem Zinkendurchmesser Dz. Dies wird dadurch ausgeglichen, dass sich das Spaltmaß des Spalts 78 zwischen den Abstreifersegmenten 52, 54 reduziert.

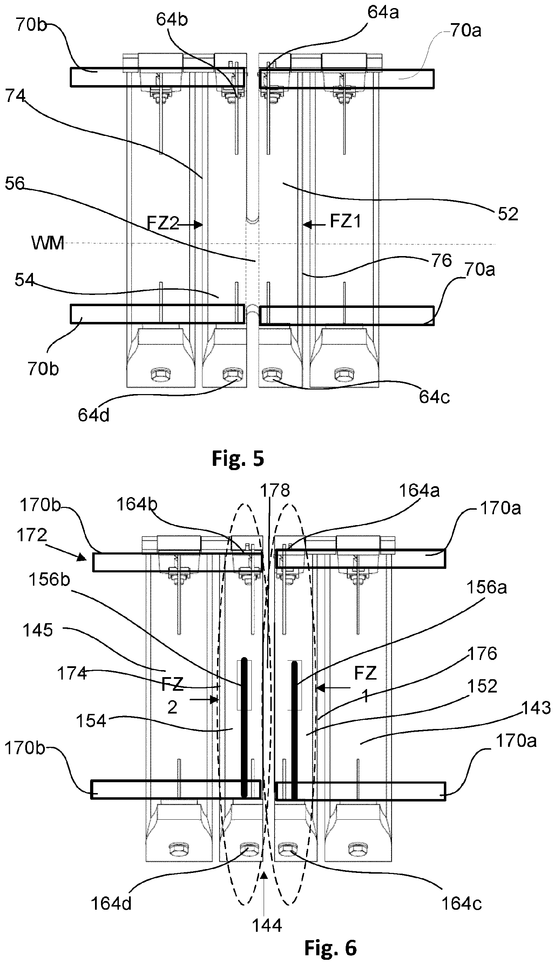

Fig. 5 zeigt eine Rückansicht der Abstreiferanordnungen 43, 44, 45 am Übergang zwischen einem ersten Jochelement 70a und einem zweiten Jochelement 70b der Querverbindungstruktur 72. Das erste Abstreifersegment 52 ist sowohl mit seinem oberseitigen Anbindungspunkt 64a als auch mit seinem unterseitigen Anbindungspunkt 64c mit dem ersten Jochelement 70a der Querverbindungsstruktur 72 verschraubt. Das zweite Abstreifersegment 54 ist sowohl mit seinem oberseitigen Anbindungspunkt 64b als auch mit seinem unterseitigen Anbindungspunkt 64d mit dem ersten Jochelement 70b der Querverbindungsstruktur 72 verschraubt.

Die Jochelemente 70a, 70b können beispielsweise als steife Elemente ausgebildet sein, die elastisch oder gelenkig verbunden sind. Die Konturanpassungsfähigkeit der Querverbindungsstruktur ist dabei abhängig von der so verbundenen Anzahl der Jochelemente.

Die Jochelemente 70a, 70b sind in der Fig. 5 nur schematisch dargestellt. Die Lage der Wellenmittelachse WM ist ebenfalls schematisch dargestellt. Auch die Welle kann beispielsweise materialelastische Bereiche oder starre, im Bereich des Ausgleichsabstreifers 44 gelenkig verbundene, Wellenteile aufweisen.

Die beiden Abstreifersegmente 52, 54 sind auf der Höhe der Wellenachse über die Verbindungsstruktur 56 miteinander verbunden. Die Verbindungsstruktur 56 ist als Festkörpergelenk ausgebildet, so dass die Ausgleichsabstreiferanordnung 44 einstückig hergestellt werden kann. Die Abstreiferkanten 72, 74 sind aufgrund der Ausbildung der Verbindungsstruktur in der Art eines Festkörpergelenks einerseits zueinander neigbar, andererseits wird durch die so gestaltete Verbindungsstruktur eine Stützstruktur verwirklicht, die der von den Zinken aufgebrachten Querkraft entgegenwirkt. So stützt die Verbindungsstruktur 56 das erste Abstreifersegment 52 über das zweite Abstreifersegment 54, das über den oberen Anbindungspunkt 64b und den unteren Anbindungspunkt 64d am zweiten Jochelement 70b angebunden ist, gegen die Querverbindungsstruktur 72 ab, um der Zinkenquerkraft FZ1 entgegenzuwirken. Dies gilt in analoger Weise auch für die Abstützung des zweiten Abstreifersegments 54 gegen die Zinkenquerkraft FZ2.

Fig. 6 zeigt eine Rückansicht auf die Abstreiferanordnungen 143, 144, 145 einer weiteren Ausgestaltung eines erfindungsgemäßen Erntegutaufnehmers ähnlich wie Fig. 5.

Auch hier liegen die Abstreiferanordnungen 143, 144, 145 am Übergang zwischen einem ersten Jochelement 170a und einem zweiten Jochelement 170b einer Querverbindungsstruktur 172. Das erste Abstreifersegment 152 ist sowohl mit seinem oberseitigen Anbindungspunkt 164a als auch mit seinem unterseitigen Anbindungspunkt 164c mit dem ersten Jochelement 170a der Querverbindungsstruktur 172 verschraubt. Das zweite Abstreifersegment 154 ist sowohl mit seinem oberseitigen Anbindungspunkt 164b als auch mit seinem unterseitigen Anbindungspunkt 164d mit dem ersten Jochelement 170b der Querverbindungsstruktur 172 verschraubt.

Die Jochelemente 170a, 170b können als starre Jochelemente 170a, 170b ausgebildet sein, die miteinander beispielsweise elastisch oder gelenkig verbunden sind. Die Jochelemente 170a, 170b sind nur schematisch dargestellt. Die Lage der Wellenmittelachse WM ist ebenfalls schematisch dargestellt.

Die beiden Abstreifersegmente 152, 154 der Ausgleichsabstreiferanordnung 144 sind über einen Spalt 178 zueinander beabstandet und entgegen der Ausführung der Fig. 5 nicht im Bereich der Abstreiferoberfläche miteinander verbunden. Dennoch können sich in dieser Ausführung die Abstreiferkanten 174, 176 mit den Jochelementen 170a, 170b zueinander neigen, so dass die Kantenebenen einen Winkel miteinander einschließen.

Zudem weist in dieser Ausführung der erfindungsgemäße Erntegutaufnehmer Stützprofile 156a, 156b auf. Die Stützprofile verbinden die Jochelemente 170a, 170b der Querverbindungsstruktur 172 mit den Abstreifersegmenten 152, 154, so dass sich eine Stabilisierung der Abstreifersegmente 152, 154 ergibt, so dass diese den durch die Zinken verursachten Zinkenquerkräften FZ1, FZ2 entgegenwirken.

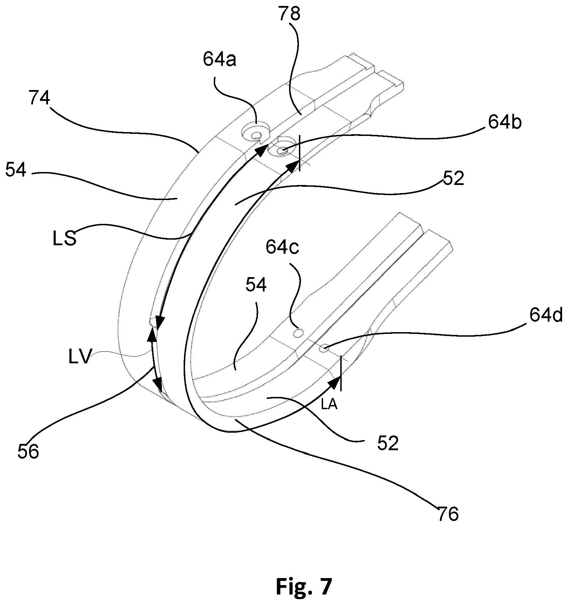

Fig. 7 zeigt eine perspektivische Ansicht einer erfindungsgemäßen Ausgleichsabstreiferanordnung 44. Die Länge LV der Verbindungsstruktur 56 entlang der Abstreiferoberfläche entspricht etwa 1/5 der Länge LA zwischen dem oberseitigen Anbindungspunkt 64a, 64b und dem jeweils gegenüberliegenden unterseitigen Anbindungspunkt 64c, 64d.

Die Spaltbreite des Spalts 78 beträgt in etwa dem Zinkendurchmesser Dz. Diese Dimensionierung sorgt für eine ausreichende Gelenkigkeit der beiden Abstreifersegmente 52, 54 zueinander und eine ausreichende Stützwirkung in Querrichtung.

Die Länge LV ist bevorzugt so lang wie möglich, so dass der Bereich, in dem die Ausgleichsabstreiferanordnung 44 eine geschlossene Fläche aufweist, möglichst groß ist. Ferner erstreckt sich die Länge LV des Verbindungsbereichs insbesondere in Richtung der unterseitigen Anbindungspunkte 64c, 64d annähernd gleich wie in Richtung der oberseitigen Anbindungspunkte 64a, 64b. Dadurch wird ein gutes Verformungsverhalten erreicht.

Fig. 8 zeigt ausschnittsweise einen erfindungsgemäßen Erntegutaufnehmer 10 in einer Rückansicht in einer Wannenlage. Der Erntegutaufnehmer 10 weist vier Aufstandsmittel 82, 84, 86, 88 auf, die eine Querverbindungsstruktur 72 tragen. In der vorliegenden Ausführung weist die Querverbindungsstruktur 72 drei Jochelemente 70a, 70b, 70c auf. Die drei Jochelemente 70a, 70b, 70c sind in Vertikalrichtung biegeelastisch miteinander verbunden, so dass sich eine Konturanpassung der Querverbindungsstruktur 72 an die Bodenkontur ergibt. Dies führt sowohl zu einem Winkelversatz der benachbarten Jochelemente 70a, 70b als auch zu einem Winkelversatz der benachbarten Wellenbereiche der Welle, die von den Jochelementen 70a, 70b, 70c getragen wird. Alternativ können die Jochelemente 70a, 70b, 70c auch gelenkig miteinander verbunden sein.

### Bezugszeichenliste

- 10: Erntegutaufnehmer
- 20: Welle
- 22a: Rechzinken
- 22b: Rechzinken
- 22c: Rechzinken
- 28: erstes Zinkenelement
- 32a, b: Rechzinken
- 32c, d: Rechzinken
- 32e, f: Rechzinken
- 38: zweites Zinkenelement
- 42: Abstreiferanordnung
- 43: Abstreiferanordnung
- 44: Ausgleichsabstreiferanordnung
- 45: Abstreiferanordnung
- 52: Abstreifersegment
- 54: Abstreifersegment
- 56: Verbindungsstruktur
- 62a: oberseitiger Anbindungspunkt
- 64a, b: oberseitiger Anbindungspunkt
- 64c, d: unterseitiger Anbindungspunkt
- 70a: erstes Jochelement
- 70b: zweites Jochelement
- 70c: drittes Jochelement
- 72: Querverbindungsstruktur
- 74: Abstreiferkante
- 76: Abstreiferkante
- 78: Spalt
- 82: Aufstandsmittel
- 84: Aufstandsmittel
- 86: Aufstandsmittel
- 88: Aufstandsmittel
- 143: Abstreiferanordnung
- 144: Ausgleichsabstreiferanordnung
- 145: Abstreiferanordnung
- 152: Abstreifersegment
- 154: Abstreifersegment
- 156a, b: Stützprofil
- 164a, b: oberseitiger Anbindungspunkt
- 164c, d: unterseitiger Anbindungspunkt
- 166a: oberseitiger Anbindungspunkt
- 170a: erstes Jochelement
- 170b: zweites Jochelement
- 172: Querverbindungsstruktur
- 174: Abstreiferkante
- 176: Abstreiferkante
- 178: Spalt

- B: Zinkenabstand
- b1, b2: Abstreifersegmentbreite
- FZ1, FZ2: Zinkenquerkraft
- D: Drehrichtung
- Dz: Zinkendurchmesser
- EK1, EK2: Kantenebene
- LV: Länge Verbindungsbereich
- LA: Länge des Abstreifers zwischen den Anbindungspunkten
- LS: Länge Spalt Oberseite
- SL: Schnittlinie
- VE: Verformungsebene
- WM: Wellenmittelachse
- WA1, WA2: Wellenachsbereiche

## Patentansprüche

1. Erntegutaufnehmer (10) umfassend eine, sich wenigstens teilweise über seine Arbeitsbreite erstreckende Welle (20), wobei entlang der Welle (20) Zinkenelemente (28, 38) angeordnet sind, wobei zwischen benachbarten Zinkenelementen (28, 38) Abstreiferanordnungen (42, 44) angeordnet sind, wobei die Welle (20) und die Abstreiferanordnungen (42, 44) von einer Querverbindungstruktur (72) getragen werden, wobei die Querverbindungsstruktur (72, 172) wenigstens zwei im Winkel gegeneinander verneigbare Jochelemente (70a, 70b, 170a, 170b) umfasst, die sich im Wesentlichen parallel zur Welle (20) erstrecken, wobei wenigstens eine Abstreiferanordnung (42, 44) in Querrichtung zu den benachbarten Zinkenelementen (28, 38) jeweils eine zugeordnete Abstreiferkante (74, 76, 174, 176) aufweist, die jeweils eine Kantenebene (EK1, EK2) bildet, **dadurch gekennzeichnet, dass** wenigstens eine Abstreiferanordnung als Ausgleichsabstreiferanordnung (44) ausgebildet ist und derart gestaltet ist, dass sich bei einer Winkeländerung der benachbarten Jochelemente (70a, 70b, 170a, 170b) zueinander eine Winkeländerung der beiden Kantenebenen (EK1, EK2) der Ausgleichsabstreiferanordnung (44) zueinander ergibt.

2. Erntegutaufnehmer nach Anspruch 1, **dadurch gekennzeichnet, dass** die Ausgleichsabstreiferanordnung (44, 144) zwei Abstreifersegmente (52, 54, 152, 154) mit je einer Abstreiferkante (74, 76, 174, 176) und einer Abstreiffläche umfasst, deren Gesamtbreite geringer ist als der Zinkenabstand (B) benachbarter Zinkenreihen (22a, 22b, 22c, 22d, 22e, 22f; 32a, 32b, 32c, 32d, 32e, 32f).

3. Erntegutaufnehmer nach Anspruch 1 oder 2, **dadurch gekennzeichnet, dass** jedes Abstreifersegment (74, 76, 174, 176) wenigstens einen oberseitigen Anbindungspunkt (64a, 64b, 164a, 164b ) und wenigstens einen unterseitigen Anbindungspunkt (64c, 64d, 164c, 164d) zur Verbindung mit der Querverbindungsstruktur (72, 172) aufweist und die Ausgleichsabstreiferanordnung (44, 144) eine Stützstruktur (56, 156a, 156b) umfasst, durch die die Abstreifersegmente (52, 54, 152, 154) in Querrichtung stabilisiert sind.

4. Erntegutaufnehmer nach Anspruch 3, **dadurch gekennzeichnet, dass** die Stützstruktur als Stützprofil (156a, 156b) ausgebildet ist, das einerseits mit der Querverbindungsstruktur (172) und andererseits mit dem Abstreifersegment (152, 154) verbunden ist.

5. Erntegutaufnehmer nach Anspruch 3, **dadurch gekennzeichnet, dass** die Stützstruktur in Form einer Verbindungsstruktur (56) in Querrichtung zwischen den beiden Abstreifersegmenten (52, 54) ausgebildet ist.

6. Erntegutaufnehmer nach einem der vorangehenden Ansprüche, **dadurch gekennzeichnet, dass** ein erstes Abstreifersegment (52, 152) mit dem ersten Jochelement (70a, 170a) und das zweite Abstreifersegment (54, 154) mit dem zweiten Jochelement (70b, 170b) verbunden ist.

7. Ausgleichsabstreiferanordnung für einen Erntegutaufnehmer mit einer Querverbindungsstruktur und mit an einer Welle angeordneten Zinkenelementen, wobei die Ausgleichsabstreiferanordnung (44) an ihren beiden Enden jeweils einen Anbindungspunkt (64a, 64b, 64c, 64d) zur Verbindung mit der Querverbindungsstruktur aufweist, **dadurch gekennzeichnet, dass** die Ausgleichsabstreiferanordnung (44) zwei Abstreifersegmente (52, 54) aufweist, die an jedem Ende in Querrichtung beabstandet sind, und so vier Schenkel bilden, die je einen Anbindungspunkt (64a, 64b, 64c, 64d) aufweisen.

8. Ausgleichsabstreiferanordnung nach Anspruch 7, **dadurch gekennzeichnet, dass** zwischen den Enden eine Verbindungsstruktur (56) vorgesehen ist, die die Abstreifersegmente (52, 54) verbindet.

9. Ausgleichsabstreiferanordnung nach Anspruch 8, **dadurch gekennzeichnet, dass** die Abstreifersegmente (52, 54) und die Verbindungsstruktur (56) einstückig, insbesondere aus einem Kunststoff, ausgeführt sind.

10. Ausgleichsabstreiferanordnung nach Anspruch 7 oder 8, **dadurch gekennzeichnet, dass** der Spalt (78) eine Breite von mehr als 1/15 der Abstreiferbreite (B) aufweist.

11. Ausgleichsabstreiferanordnung nach Anspruch 7 bis 9, **dadurch gekennzeichnet, dass** die Länge LV der Verbindungsstruktur (56) entlang der Abstreiferkante (74, 76) mehr als 1/5 und weniger als die Hälfte der Abstreiferlänge (LA) zwischen den Anbindungspunkten (64a, 64b, 64c, 64d) entlang der Abstreiferkante (74, 76) ist.
